# EUROPÄISCHE PATENTSCHRIFT

(11) **EP 2 011 558 B1**
(45) Veröffentlichungstag und Bekanntmachung des Hinweises auf die Patenterteilung: **10.08.2011**
(21) Anmeldenummer: 07009772.0
(22) Anmeldetag: 16.05.2007
(51) Int. Cl.: B01D 53/10, B01D 53/04

(54) **Anlage und Verfahren zum Entfernen von Schadstoffen aus Abgas**
Installation and method for removing contaminants from exhaust gas
Installation et procédé pour la suppression de substances toxiques de gaz d'échappement

(43) Veröffentlichungstag der Anmeldung: 07.01.2009
(73) Patentinhaber: Babcock Noell GmbH, 97080 Würzburg (DE)
(72) Erfinder: Welp, Helmut, Dipl.-Ing., 97199 Ochsenfurt (DE); Schmidt, Thomas, Dipl.-Ing., 97346 Iphofen (DE); Weigert, Norbert, Dipl.-Ing., 93098 Mintraching (DE)
(74) Vertreter: Lüdtke, Frank

(56) Entgegenhaltungen:
- EP-A- 0 177 896
- WO-A-00/04983
- WO-A-90/09226
- WO-A-96/23577
- DE-A1- 2 910 537
- DE-A1- 2 934 109
- DE-A1- 3 610 942

## Beschreibung

Die Erfindung betrifft eine Anlage zum Entfernen von Schadstoffen und Schadgasen entsprechend den Merkmalen des ersten Patentanspruches und ein Verfahren zum Entfernen von Schadstoffen und Schadgasen aus Abgas.

Die Erfindung ist geeignet zum Entfernen von Schadstoffen und Schadgasen wie z. B. Fluorwasserstoff, Chlorwasserstoff, Schwefeloxiden, Schwermetallen, organischen Komponenten wie Dioxine, Furane, PAH, PCB und Staub aus Abgas bzw. Abluft hinter Verbrennungsanlagen.

Schüttschichtfilter und Flugstromadsorber sind bekannte Verfahren zur Abscheidung von Schadstoffen aus Abgasen bzw. Abluft.
Beim Schüttschichtfilter durchströmt das zu reinigende Medium eine lockere körnige Schicht eines Adsorptionsmittels. Das Adsorptionsmittel besteht abhängig von den abzuscheidenden Schadstoffen aus unterschiedlichen Materialien, mit unterschiedlichen Korngrößen und Porenvoluminas, wie z. Bsp. Kalkstein, Kalziumhydroxid, Zeolithe, Silikagel, Aluminiumhydroxid, Aktivkohle, Herdofenkoks, Tonmineralien u. a. sowie speziell für den Anwendungsfall hergestellte Pellets oder Granulate aus o. g. Materialien oder deren Mischungen. Hinsichtlich der Betriebsweise unterscheidet man die Schüttschichtfilter mit Festbett, mit ruhender Schüttung und mit Wanderbett, mit bewegter Schüttung, sowie deren Durchströmung in Gleichstrom, Gegenstrom und Kreuzstrom. Bei gleichmäßig verteilter Einleitung des Abluft- bzw. Abgasstroms durch das Adsorbensbett lagern sich die Schadstoffe an der Oberfläche des Adsorbens an und werden dadurch gebunden. Man unterscheidet dabei grundsätzlich eine reine Physisorption, van der Waals-Kräfte, von der hauptsächlich Schwermetalle und organische Komponenten betroffen sind und die Chemiesorption, bei der eine stoffliche Umsetzung durch chemische Reaktionen zwischen Schadstoffen (Adsorptiv) und Adsorbens erfolgt. Davon betroffen sind hauptsächlich Schadstoffe wie Fluorwasserstoff, Chlorwasserstoff und Schwefeloxide (SO₂, SO₃). Nachteilig für den Schüttschichtfilter ist bedingt durch die notwendige grobe Kornstruktur des Adsorbens der niedrige Ausnutzungsgrad von ca. 15 % bis max. 35 %. Dies führt zu einem hohen Verbrauch der zum Teil teuren Adsorptionsmitteln und wird dadurch trotz der vergleichsweise niedrigen Investitionskosten für einen Schüttschichffilter für die Anwendung schnell unwirtschaftlich. Außerdem eignet sich ein Schüttschichtfilter nur bedingt zur Staubabscheidung.

Aus DE 199 61 691 A1 sind ein Verfahren und eine Vorrichtung zum Reinigen von Rauchgas bekannt, bei dem das Rauchgas einem Ringraum mit Granulat zugeführt wird, wobei mittels Elevator dem Ringraum ständig neues Granulat zugegeben und mittels Zellenradschleuse das verbrauchte Granulat ausgeführt wird. Das ausgeführte Granulat wird einem Sieb zugegeben, auf dem das zerkleinerte Granulat abgesiebt und aus dem Verfahren entfernt wird. Das grobe Granulat wird mit frischem Granulat gemeinsam wieder dem Ringraum zugeführt. Nachteilig an diesem Verfahren ist, daß der Ausnutzungsgrad des Adsorbens gering ist.

Beim Flugstromadsorber wird feinkörniges, staubförmiges Adsorbens dem Luft- bzw. Abgasstrom ein- oder mehrstufig zugegeben wobei eine möglichst homogene Verteilung anzustreben ist. In der der Eindüsestelle folgenden Mischungsstrecke beginnt die Adsorption der Schadstoffe. Der beladene Adsorbensstaub wird in einem nachfolgenden Staubabscheider abgeschieden. Bei Verwendung eines Gewebefilters zur Staubabscheidung findet auf dem sich bildenden Filterkuchen eine Nachabscheidung statt. Da das Adsorbens häufig noch freie Kapazität aufweist wird zur Optimierung des Adsorbensverbrauchs ein Teilstrom des im Staubabscheider anfallenden Adsorbens rezirkuliert. Der Flugstromadsorber wird hauptsächlich zur Restabscheidung bei relativ geringen Schadstoffkonzentrationen eingesetzt und ist zur Abscheidung bei hohen Schadstoffkonzentrationen nicht geeignet.

Aus WO 00/04983 A *(*PCT/US 99/96518*)* ist ein Verfahren zur Reinigung von Rauchgas bekannt, bei dem das Rauchgas mittels Rauchgaskonditionierung gekühlt wird. Nachfolgend wird in den Gasstrom mit einem Gemisch von in einer Mühle zerkleinerten Adsorbtionsmittel und Rückständen aus einem Gewebefilter des Verfahrens aufgegeben, so daß Rauchgas und Adsorbtionsmittel miteinander reagieren können. In einem weiteren Schritt wird mittels Gewebefilters das Adsorbens herausgefiltert und ein Teil des herausgefilterten Adsorbens zusammen mit neuem Adsorbens dem Verfahren wieder zugegeben.

In DE 103 36 987 A1 wird ein Verfahren zur Nutzung von inaktiven Feststoffen aus Abgasbehandlungsprozessen beschrieben, bei dem Adsorbensien von einer Teilchengröße 0.5 bis 100 µm einer fragmentierenden Behandlung unterzogen und damit diese reaktiviert werden. Eine fragmentierende Zerkleinerung durch Zerkleinern oder Mahlen ist allerdings bereits in WO 00/04983 für Feingut beschrieben, so daß der Inhalt dieses Dokumentes nicht wesentlich über die bereits bekannten Merkmale hinausgeht.

Ausgehend von diesem Stand der Technik ist es Aufgabe der Erfindung, ein kostengünstiges Verfahren zur trockenen Abscheidung von Schadstoffen oder Schadgasen aus Abluft- bzw. Abgasen bereitzustellen, das bei erforderlichen Abscheidegraden (größer 90 %) die zum Einsatz kommenden Adsorbenzien besser ausnutzt.

Diese Aufgabe wird durch eine Anlage nach den Merkmalen des ersten Patentanspruches und ein Verfahren zum Entfernen von Schadstoffen aus Abgasen gelöst.

Unteransprüche geben vorteilhafte Ausgestaltungen der Erfindung wieder.

In allgemeinster Form wird diese Aufgabe dadurch gelöst, daß ein Festbettadsorber mit einem Flugstromadsorber in Reihe geschaltet wird, wobei das dem Festtbettadsorber zugegebene frische grobkörnige Adsorbens nach seinem Einsatz in einem Zwischenschritt aufbereitet und dem Flugstromadsorber zugegeben wird.

Weiterhin ist dem Flugstromadsorber ein Staubfilter nachgeschaltet, dessen Adsorbens in dem Maße aus dem Verfahren ausgebracht wird, in dem dem Verfahren neues Adsorbens zugeführt wird, wobei Reingas das Verfahren verläßt und ein Teil des ausgefilterten Adsorbens zum Flugstromadsorber zurückgeführt wird.

Vorteilhaft ist es, daß der Festbettadsorber als Schüttschichtfilter ausgebildet ist. Sein Aufgabegut kann grobkörniges Adsorbens mit einer Kornobergrenze von 2 - 8 mm sein. Weiterhin ist es vorteilhaft, die Aufbereitung mittels Schlagmühle, Stiftmühle, Hammermühle, Prallmühle ggf. auch in mehreren Stufen, vorzunehmen, wobei eine Austragsklassierung so erfolgt, daß vorteilhafterweise eine Körnung entsteht, die in den Flugstromadsorber aufgegeben werden kann, beispielsweise kleiner < 50 µm.

Weiterhin ist es vorteilhaft, dem Festbettadsorber eine Rauchgaskonditionierung vorzuschalten. Damit wird erreicht, daß das Abgas oder Rauchgas durch eingedüstes Prozeßwasser die für das Adsorptionsverfahren optimale Prozeßtemperatur erreicht.

Weiterhin ist es vorteilhaft, dem Festbettadsorber zur Entstaubung einen Hydrozyklon vorzuschalten. Damit werden alle Stoffe aus dem Gas entfernt, welche das Verfahren ungünstig belasten. Weiterhin ist es vorteilhaft, als Adsorptionsmittel, Adsorbens oder Frischadsorbens fließfähiges Granulat oder Feststoff auf Natrium-, Kalium-, Magnesium- oder Kalziumbasis zuzugeben, wobei dem Adsorptionsmittel oberflächenaktive Stoffe wie Aktivkohle, Herdofenkoks, Graphit oder ähnliche Stoffe zugemischt werden können. Vorteilhaft ist es, als Staubfilter einen Gewebefilter zu verwenden.

Weiterhin ist es vorteilhaft, die Festbett- und Flugstromadsorption oberhalb des Säuretaupunktes stattfinden zu lassen.

Durch die erfindungsgemäße Anlage und das Verfahren zum Entfernen von Schadstoffen und Schadgasen aus Abgaben mittels Trockensorption ist ein optimales Ausnutzen des Sorbens geben, wobei durch die Kombination der beiden Abscheidestufen folgende Vorteile entstehen:
Durch das Puffervermögen des Schüttschichtfilters werden Schadstoffspitzen abgefangen und wirken sich auf die nachfolgende Reinigungsstufe nicht aus.
Der Nachteil des Schüttschichtfilters bezüglich der Staubabscheidung wird durch die nachfolgende Filterstufe kompensiert.
Prozeßwasser ist allenfalls zur Rauchgaskonditionierung erforderlich. Abwasser fällt nicht an. Der Abscheideprozeß kann in beiden Stufen bei Temperaturen oberhalb des Säuretaupunktes stattfinden.
Die Anlagentechnik ist insgesamt einfach, was zu minimalen Investitionskosten führt.

Im Folgenden wird die Erfindung an einem Ausführungsbeispiel und einer Figur näher erläutert.

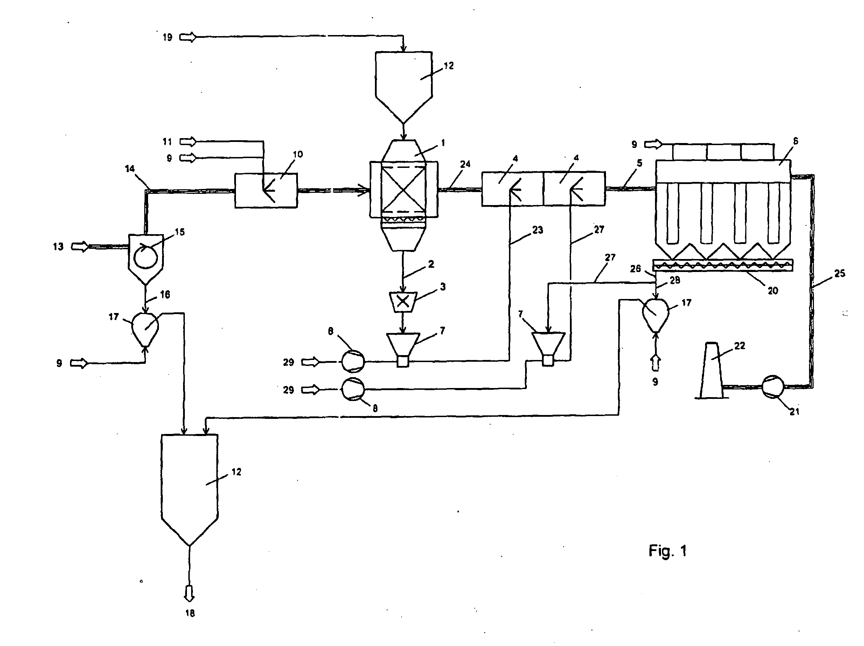

Die Figur zeigt die schematische Darstellung einer Rauchgasreinigungsanlage, in der für die Festbettadsorption als Festbettfilter ein Schüttschichtfilter 1 eingesetzt ist, in den das Rohgas 13 vom Kessel eingeleitet wird.
Dem Schüttschichtfilter 1 ist ein Zyklon 15 vorgeschaltet, mit dem Flugstaub 16 entfernt wird, die mittels Fördergefäß 17 und Druckluft 9 fluidisiert wird und in einen Vorratsbehälter 12 gelangt und als Reststoff 18 aus dem Prozeß entfernt wird. Das flugstaubentfrachtete Rohgas 14 wird in eine Rauchgaskonditionierung 10 mittels Druckluft 9 und Wasser 11 auf die optimale Reaktionstemperatur und den optimalen Feuchtegehalt gebracht. Das so konditionierte Gas strömt in den Schüttschichtfilter 1, der aus einem Vorratsbehälter 12 mit Frischadsorbens 19 beschickt wird. Das Frischadsorbens 19 besteht aus einem körnigen fließfähigen Feststoff oder Granulat, auf Natrium-, Kalium-, Magnesium- oder Calciumbasis, welches mit oberflächenaktiven Stoffen wie Aktivkohle, Herdofenkoks, Graphit oder ähnliches gemischt sein kann. Für die Korngröße des frischen Asorbens sind 2 bis 3 mm vorteilhaft.

Im Schüttschichtfilter 1 erfolgt die Teilabscheidung der im Rohgas 14 enthaltenen Schadstoffe und Schadgase.
Das teilbeladene Adsorbens 2 wird einer mechanischen Aufbereitung 3, im vorliegenden Fall einer Schlagmühle zugeführt und < 50 µm zerkleinert.
Das Zerkleinerungsprodukt wird mittels eines dafür vorgesehenen Aggregats einem Luftstrom 29 zugeführt der durch das Fördergebläse 8 erzeugt wird.
Dieses zerkleinerte Adsorbens 23 wird nach dem Schüttschichtfilter 1 dem vorgereinigten Rohgas 24 zugeführt. Dies erfolgt an der Eindüs- und Vermischungsstrecke 4, wo es mit dem vorgereinigten Rohgas 24 reagiert und über dem Rauchgaskanal 5 in den Staubfilter 6 gelangt, der hier einen Gewebefilter darstellt. In dieser zweiten Abscheidestufe erfolgt die Nachabscheidung von Schadgasen und Schadstoffen durch den flugfähigen Adsorbensstrom während der Flugphase und am stehenden Filterkuchen des Gewebefilters 6. Das beladene Adsorbens 26 wird im Staubfilter 6 abgetrennt und ausgeschleust. Das Reingas 25 wird mit Hilfe eines Rauchgasgebläses 21 über einen Kamin 22 abgeleitet. Mittels Fördereinrichtung, im vorliegenden Fall eine Förderschnecke 20, wird das beladene Adsorbens 26 aus dem Staubfilter 6 entfernt. Das verbrauchte Adsorbens 28 wird in dem Maße, in dem neues Frischadsorbens 19 zugeführt wird, über einen Vorratsbehälter 12 mittels Druckluft 9 und ein Dosiergerät 17 als Reststoff 18 aus dem Prozeß entfernt. Der Rest des beladenen Adsorbens 26 wird über ein Aggregat 7 zum Beladen eines Luftstromes wieder dem vorgereinigten Rohgas 24 mittels der Eindüs- und Vermischungsstrecke 4 zugeführt und kann weiterhin als rezirkulierendes Adsorbens 27 in der zweiten Abscheidestufe Verwendung finden.

Durch die vorgeschlagene Anlage und das eingesetzte Verfahren wird erreicht, daß der Additiveinsatz für höhere Schadstoff-, Schadgasabscheidegrade gegenüber den einzelnen Stufen wesentlich verringert und somit auch der Reststoffanfall wesentlich minimiert wird.

### Liste der verwendeten Bezugszeichen

- 1: Festbettadsorber/Schüttschichtfilter
- 2: teilbeladenes Adsorbens
- 3: mechanische Aufbereitung
- 4: Adsorbens Eindüse- und Vermischungssstrecke
- 5: Rauchgaskanal
- 6: Staubfilter/Gewebefilter
- 7: Aggregat zur Adsorbensaufgabe
- 8: Fördergebläse für Luft
- 9: Druckluft
- 10: Rauchgaskonditionierung
- 11: Wasser
- 12: Vorratsbehälter
- 13: Rohgas
- 14: Flugstaubentfrachtetes Rohgas
- 15: Zyklon
- 16: Flugstaub
- 17: Fördergefäß
- 18: Reststoff
- 19: Frischadsorbens
- 20: Fördereinrichtung/Förderschnecke
- 21: Rauchgasgebläse
- 22: Kamin
- 23: Aufbereitetes Adsorbens
- 24: Vorgereinigtes Rohgas
- 25: Reingas
- 26: beladenes Adsorbens
- 27: rezirkuliertes Adsorbens
- 28: verbrauchtes Adsorbens
- 29: Luft

## Patentansprüche

1. Anlage zum Entfernen von Schadstoffen und Schadgasen aus Abgasen mittels Adsorber, bestehend aus
- einem Festbettadsorber (1), dem eine Adsorbens Eindüs- und Vermischungsstrecke (4) für das vorgereinigte Gas (24), ein Rauchgaskanal (5) und ein Apparat zur mechanischen Aufbereitung (3) für das teilbeladene Sorbens (2) nachgeschaltet sind, wobei eine Leitung für das aufbereitete Adsorbens (23) vom Aufbereitungsaggregat zur Adsorbens Eindüs- und Vermischungsstrecke (4) führt,
- ein der Adsorbens Eindüse- und Vermischungsstrecke (4) und dem Rauchgaskanal (5) nachgeschalteter Staubfilter (6), von dem Leitungen für ein beladenes Adsorbens (26) zur Adsorbens Eindüs- und Vermischungsstrecke (4) führen und Leitungen für das Reingas (25) zu einem Kamin (22).

2. Anlage nach Anspruch 1, **dadurch gekennzeichnet, daß** der Festbettadsorber (1) als Schüttschichtfilter ausgebildet ist.

3. Anlage nach Anspruch 1 und 2, **dadurch gekennzeichnet, daß** die Aufbereitung (3) mittels Schlagmühle, Stiftmühle, Hammermühle, Prallmühle mit Austragsklassierung erfolgt.

4. Anlage nach den Ansprüchen 1 bis 3, **dadurch gekennzeichnet, daß** dem Festbettadsorber (1) eine Rauchgaskonditionierung (10) vorgeschaltet ist.

5. Anlage nach den Ansprüchen 1 bis 4, **dadurch gekennzeichnet, daß** dem Festbettadsorber (1) zur Entstaubung ein Zyklon (15) vorgeschaltet ist.

6. Anlage nach den Ansprüchen 1 bis 5, **dadurch gekennzeichnet, daß** als Frischadsorbens (19) ein fließfähiges Granulat oder Feststoff auf Natrium-, Kalium-, Magnesium- oder Kalziumbasis zugegeben wird.

7. Anlage nach Anspruch 6, **dadurch gekennzeichnet, daß** dem Frischadsorbens (19) oberflächenaktive Stoffe wie Aktivkohle, Herdofenkoks, Graphit oder ähnliches zugegeben werden.

8. Anlage nach einem der Ansprüche 1 bis 7, **dadurch gekennzeichnet, daß** der Staubfilter (6) einen Gewebefilter darstellt.

9. Verfahren zum Entfernen von Schadstoffen oder Schadgasen aus Abgas mittels Trockenadsorption, **gekennzeichnet durch** ein mehrstufiges Adsorptionsverfahren, bei dem
- das Abgas einer Festbettadsorption und einer nachgeschalteten Flugstromadsorption unterzogen wird,
- wobei das Adsorptionsmittel der Feststoffadsorption nach einer mechanischen Aufbereitung der Flugstromadsorption zugeführt wird,
- der Flugstromadsorption ein Filtervorgang folgt, nach dem gereinigtes Rauchgas und Adsorbens abgeführt werden,
- wobei ein Teil des Adsorbens der Flugstromadsorption zugeführt wird und
- so viel Adsorbens aus dem Verfahren ausgeführt wird, wie der Festbettadsorption als Frischadsorbens zugeführt wird.

10. Verfahren nach Anspruch 9, **dadurch gekennzeichnet, daß** die mechanische Aufbereitung eine Zerkleinerung mit nachfolgender Klassierung darstellt.

11. Verfahren nach Anspruch 10, **dadurch gekennzeichnet, daß** die mechanische Aufbereitung mittels Schlag- oder Prallbeanspruchung < 50 µm erfolgt.

12. Verfahren nach den Ansprüche 9 bis 11, **dadurch gekennzeichnet, daß** die Festbett- und Flugstromadsorption oberhalb des Säuretaupunktes stattfindet.

13. Verfahren nach den Ansprüchen 9 bis 12, **dadurch gekennzeichnet, daß** dem Adsorptionsverfahren ein Entstaubungsverfahren vorgeschaltet ist.

14. Verfahren nach den Ansprüchen 9 bis 13, **dadurch gekennzeichnet, daß** die optimale Prozeßtemperatur und optimaler Feuchtegehalt durch Eindüsen von Prozeßwasser für das Adsorptionsverfahren eingestellt wird.

## Claims

1. A plant for removing pollutants and harmful gas compounds contained in exhaust gases by means of an absorber, consisting of
- a packed bed absorber (1) downstream of which there are connected a path (4) for injecting and mixing an adsorbent for the pre-cleaned gas (24), one flue gas duct (5) and one apparatus for mechanically processing (3) the partially loaded sorbent (2), one line for the processed adsorbent (23) leading from the processing aggregate to the path (4) for injecting and mixing the adsorbent,
- a dust filter (6) connected downstream of the path (4) for injecting and mixing an adsorbent and of the flue gas duct (5), lines for a loaded adsorbent (26) leading to the path (4) for injecting and mixing said adsorbent and lines for the pure gas (25) leading to a stack (22) departing from said dust filter.

2. The plant as set forth in claim 1, **characterized in that** the packed bed absorber (1) is configured to be a packed bed filter.

3. The plant as set forth in claim 1 and 2, **characterized in that** the processing (3) occurs by means of an impact mill, a pin mill, a hammer mill, a baffle mill with discharge sorting.

4. The plant as set forth in the claims 1 through 3, **characterized in that** a flue gas conditioning equipment (10) is connected upstream of the packed bed absorber (1).

5. The plant as set forth in the claims 1 through 4, **characterized in that** a cyclone (15) is connected upstream of the packed bed absorber (1) for dust removal.

6. The plant as set forth in the claims 1 through 5, **characterized in that** a sodium-, potassium-, magnesium- or calcium-based flowable granulate or solid is added as a fresh adsorbent (19).

7. The plant as set forth in claim 6, **characterized in that** surfactants such as activated carbon, activated lignite, graphite or similar are added to the fresh adsorbent (19).

8. The plant as set forth in any one of the claims 1 through 7, **characterized in that** the dust filter (6) constitutes a fabric filter.

9. A method of removing pollutants and harmful gas compounds from exhaust gases by means of dry adsorption, **characterized by** a multistage adsorption method wherein
- the exhaust gas is submitted to a packed bed adsorption and to an entrained-phase adsorption connected downstream thereof,
- wherein the adsorption means is supplied to the solid material adsorption after mechanical processing of the entrained-phase adsorption,
- the entrained-phase adsorption is followed by a filter process after which cleaned flue gas and adsorbent are evacuated,
- wherein part of the adsorbent is supplied to the entrained-phase adsorption and
- adsorbent is evacuated from the method in the same quantity as fresh adsorbent is supplied to the packed bed adsorption.

10. The method as set forth in claim 9, **characterized in that** the mechanical processing constitutes a crushing with subsequent sorting.

11. The method as set forth in claim 10, **characterized in that** the mechanical processing occurs by means of impact or shock stress < 50 µm.

12. The method as set forth in the claims 9 through 11, **characterized in that** the packed bed and entrained-phase adsorption takes place above the acid dew point.

13. The method as set forth in the claims 9 through 12, **characterized in that** a dust removing method is connected upstream of the adsorption method.

14. The method as set forth in the claims 9 through 13, **characterized in that** the optimal processing temperature and optimal humidity content are set by injecting process water for the adsorption method.

## Revendications

1. Installation destinée à éliminer les polluants et les substances nocives contenus dans les gaz résiduels au moyen d'un absorbeur constitué
- d'un absorbeur à lit fixe (1) en aval duquel sont montés un tronçon d'injection et de mélangeage (4) d'un adsorbant pour le gaz (24) prépurifié, un conduit pour les gaz de fumée (5) et un appareil pour la préparation mécanique (3) du sorbant (2) partiellement chargé, une conduite pour l'adsorbant (23) préparé conduisant du groupe de préparation au tronçon d'injection et de mélangeage (4) de l'adsorbant,
- d'un filtre anti-poussières (6) placé en aval du tronçon d'injection et de mélangeage (4) de l'adsorbant et du conduit pour les gaz de fumée (5), des conduites pour un adsorbant chargé (26) conduisant au tronçon d'injection et de mélangeage (4) de l'adsorbant et des conduites pour le gaz purifié (25) conduisant à une cheminée (22).

2. Installation selon la revendication 1, **caractérisée en ce que** l'absorbeur à lit fixe (1) est réalisé sous forme de filtre à lit fixe.

3. Installation selon les revendications 1 et 2, **caractérisée en ce que** la préparation (3) se fait au moyen d'un broyeur à percussion, d'un broyeur à broches, d'un broyeur à marteaux, d'un broyeur à impact avec triage des matières déversées.

4. Installation selon les revendications 1 à 3, **caractérisée en ce qu'**un système de conditionnement (10) des gaz de fumée est monté en amont de l'absorbeur à lit fixe (1).

5. Installation selon les revendications 1 à 4, **caractérisée en ce qu'**un cyclone (15) est monté en amont de l'absorbeur à lit fixe (1) pour le dépoussiérage.

6. Installation selon les revendications 1 à 5, **caractérisée en ce qu'**un adsorbant frais (19) est ajouté sous forme de granulat ou de solide fluide à base de sodium, de potassium, de magnésium ou de calcium.

7. Installation selon la revendication 6, **caractérisée en ce que** des tensioactifs tels que du charbon activé, du coke de lignite, du graphite ou similaire sont ajoutés à l'adsorbant frais (19).

8. Installation selon l'une quelconque des revendications 1 à 7, **caractérisée en ce que** le filtre anti-poussières (6) représente un filtre en tissu.

9. Procédé pour éliminer les polluants et les gaz nocifs contenus dans les gaz résiduels au moyen d'une adsorption sèche, **caractérisé par** un procédé d'adsorption à plusieurs étapes, où
- les gaz résiduels sont soumis à une adsorption à lit fixe et à une adsorption à lit entraîné montée en aval,
- le moyen d'adsorption étant acheminé vers l'adsorption de solide après une préparation mécanique de l'adsorption à lit entraîné,
- l'adsorption à lit entraîné étant suivie par un filtrage après lequel des gaz de fumée purifiés et un adsorbant sont évacués,
- une partie de l'adsorbant étant acheminée vers l'adsorption à lit entraîné et
- la quantité d'adsorbant évacuée du procédé correspondant à la quantité d'adsorbant frais acheminé vers l'adsorption à lit fixe.

10. Procédé selon la revendication 9, **caractérisé en ce que** la préparation mécanique constitue un concassage suivi par un triage.

11. Procédé selon la revendication 10, **caractérisé en ce que** la préparation mécanique se fait par sollicitation par choc ou par impact < 50 µm.

12. Procédé selon les revendications 9 à 11, **caractérisé en ce que** l'adsorption à lit fixe et l'adsorption à lit entraîné ont lieu au-dessus du point de rosée acide.

13. Procédé selon les revendications 9 à 12, **caractérisé en ce qu'**un procédé de dépoussiérage est monté en amont du procédé d'adsorption.

14. Procédé selon les revendications 9 à 13, **caractérisé en ce que** la température de traitement optimale et l'humidité optimale sont réglées en injectant de l'eau de traitement pour le procédé d'adsorption.
